Europäisches Patentamt

European Patent Office

Office européen des brevets

(11) Publication number: **0 079 318**
**B1**

## EUROPEAN PATENT SPECIFICATION

(45) Date of publication of patent specification: **11.09.85**

(51) Int. Cl.⁴: **B 60 R 9/04**

(21) Application number: **82850205.4**

(22) Date of filing: **20.10.82**

(54) **A luggage carrier for vehicles.**

(30) Priority: **11.11.81 SE 8106685**

(43) Date of publication of application:
**18.05.83 Bulletin 83/20**

(45) Publication of the grant of the patent:
**11.09.85 Bulletin 85/37**

(84) Designated Contracting States:
**AT BE CH DE FR GB IT LI NL**

(56) References cited:
**DE-A-2 945 950**
**FR-A-2 199 706**

(73) Proprietor: **Industri AB Thule**
**Box 67**
**S-330 33 Hillerstorp (SE)**

(72) Inventor: **Thulin, Willis**
**Vallgatan 18**
**S-330 33 Hillerstorp (SE)**

(74) Representative: **Linde, Leif**
**Vernamo Patentbyrä AB P.O. Box 1**
**S-270 11 Abbekas (SE)**

Courier Press, Leamington Spa, England.

# Description

The present invention relates to a luggage carrier for vehicles comprising two support legs for fastening the luggage carrier to the roof of the vehicle at each side thereof and comprising a preferably rod shaped support element.

In a previously known luggage carrier of this kind, as shown in the document DE-A-2945950 the support element is connected with the support legs such that the end portions of the support element are received in and extend through openings formed in the support legs. Thereby, the support element is displacable in its longitudinal direction in the openings of the support legs in order to make it possible to adjust the distance between the support legs so that the luggage carrier can be connected with vehicle roofs of different widths. The support legs can be fixed in relation to the support element at the desired distance from each other by means of locking screws, each screw being received in a hole formed in a wall positioned adjacent said opening in each support leg, the end portion of each locking screw being screwable into each of said openings.

A drawback of the luggage carriers of the type described above is that the support element of the luggage carrier can project a substantial distance laterally outside the vehicle at one side thereof, if the support element has a great length in relation to the width of the vehicle to which the luggage carrier is fastened and the support element is fixed in an asymmetrical position in relation to the support legs. This fact can constitute a traffic danger and has in certain cases caused the traffic authorities not to recommend luggage carriers of this kind.

The object of the present invention is to provide a luggage carrier for vehicles of the kind described above, which does not include the drawbacks defined above. In order to comply with this object the luggage carrier according to the invention comprises in association with at least one of the support legs thereof a stopper device for restricting the displacement of the support element in the opening of the support leg.

In a preferred embodiment the stopping device comprises a stopping element connected with the support element and having an engagement surface which is adapted to engage the support leg or an element connected therewith in a predetermined relative position of the support element in the opening of the support leg in order to prevent a displacement of the support element beyond said predetermined position.

Preferably the stopping element is U-shaped having two shanks and a web portion, said web portion constituting the engagement surface mentioned above, one of the shanks being positioned in the opening of the support leg between the wall positioned adjacent the opening, in which wall the hole for the locking screw is formed, and the end portion of the support element received in said opening, and the other shank being positioned at the side of said wall which is opposite to said opening and being formed with a slot extending in the longitudinal direction of the support element, the locking screw extending through said slot into the hole formed in said wall.

Thus, in a luggage carrier according to the invention it is possible to adjust within predetermined limits the distance between the support legs without running the risk of positioning the support element in such a way in relation to the support legs that an end portion of the support element will project laterally from the vehicle in a way which is dangerous for the traffic.

The invention is described in the following with reference to the accompanying drawings.

Fig. 1 is a side view of a luggage carrier according to the invention.

Fig. 2 is a section on an enlarged scale through a luggage carrier according to Fig. 1.

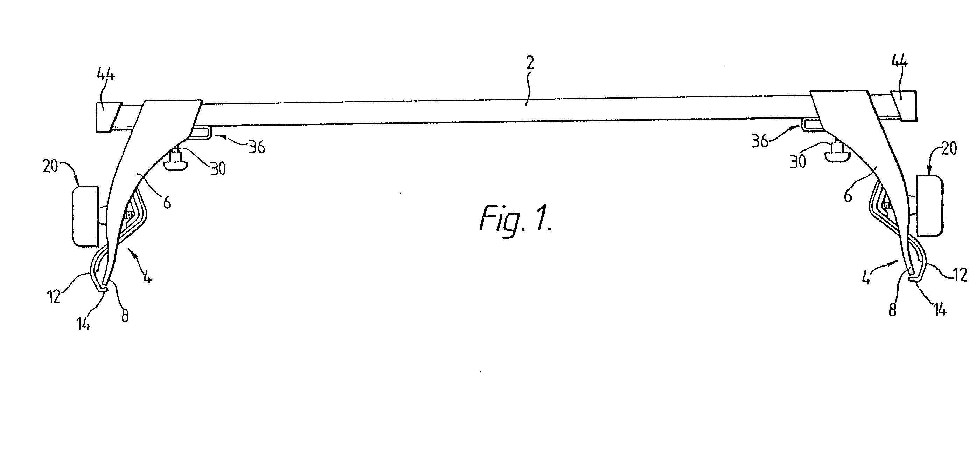

In Fig. 1 there is shown a luggage carrier comprising a support element 2 and two support legs 4. The support legs are adapted to be connected with a vehicle roof at each side thereof and are of the same structure.

Each support leg 4 comprises a support portion 6 having a lower portion 8 which is adapted to be supported in the upwards opening rain gutters of the vehicle roof. Each support leg 4 also comprises a clamping portion 12 which is movably connected with the support portion 6 at its upper portion 10 and has a lower annular portion 14 which is adapted to engage the lower surface of the rain gutter when the support leg 4 is clamped to a vehicle roof. The clamping portion 12 is connected with the support portion 6 by means of a pin 16 having an enlarged head and being received in a slot 18 in the clamping portion 12.

The support leg is lockable to the rain gutter of a vehicle roof by actuating the clamping portion 12 by means of a clamping device 20 comprising a clamping element in the form of a screw 22 and a knob 24 connected therewith. The screw 22 extends through a threaded opening in a lug 26 on the portion 6 and engages the central portion of the clamping portion 12 with its end. When the screw 22 is screwed against the clamping portion 12 the end of the screw will exert a pressure force against the clamping portion 12, so that a locking of the support leg 4 is provided. At its upper end the support portion 6 is formed with a lateral, through opening 28 receiving an end portion of the support element 2. The relative position between the support element 2 and the support leg 4 can be adjusted by fixing the support element in the opening 28 in the support portion 6 in the desired position by means of a locking screw 30 which is provided with a knob 32 and extends into the opening 28 through a threaded hole in a wall 34 defining the lower surface of the opening 28. Thus, it is possible to adjust the distance between the support legs 4 with regard to the width of the vehicle roof to which the luggage carrier shall be connected.

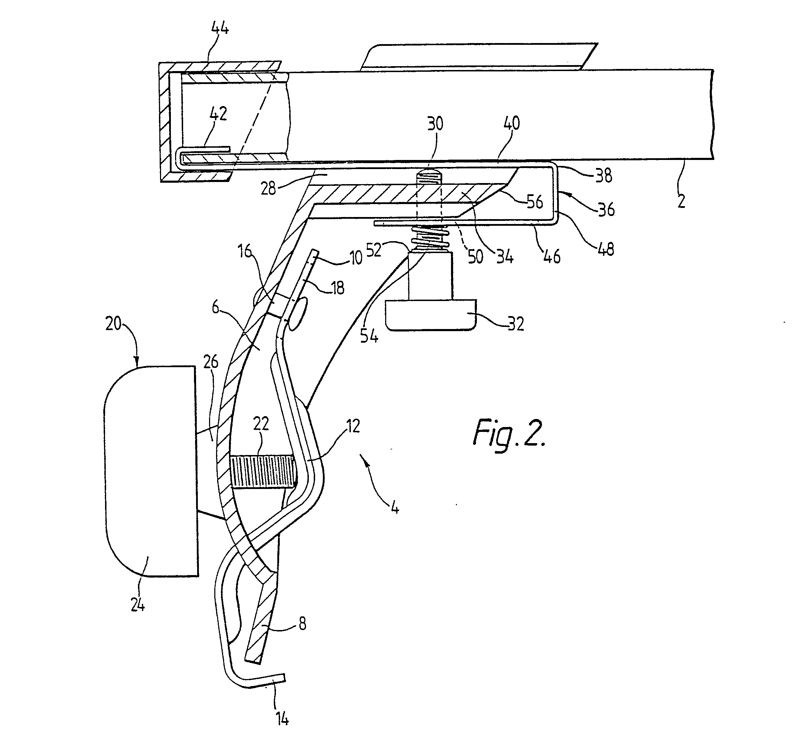

In order to prevent that the support element 2 is connected with the support legs 4 in such a way that one end portion of the support element 2 will project laterally so far outside the support leg 4 and thereby outside the side of the vehicle that there is provided a traffic risk, the luggage carrier according to the invention is provided with a stopping device 36 at each support leg 4 thereof. The stopping device 36 is most clearly shown in Fig. 2 and even if only one support leg 4 and the stopping device connected therewith are shown in Fig. 2 it is recognized that a stopping device of the same kind is provided at the support leg of the luggage carrier not shown in Fig. 2.

The stopping device 36 comprises a stopping element 38 which in the embodiment shown in the drawing is formed by a sheet metal material bent to U-shape. Thus, the stopping element 38 comprises a shank 40 which is positioned between the lower surface of the end portion of the support element 2 and the upper surface of the wall 34 being positioned adjacent the opening 22 in the support leg 4. The shank 40 has an end portion 42 which is bent into the support element 2 at the end thereof in order to retain the stopping element 38 in its correct position. The retaining of the stopping element 38 is improved also by means of a cap 44 positioned on the end of the support element 2. The stopping element 38 also comprises a shank 46 which is connected with the shank 40 by means of a web portion 48. The shank 46 is positioned in connection with the lower surface of the wall 34 and is formed with a slot 50 extending in parallel with the support element 2 and through which the locking screw 30 extends. Between an engagement surface 52 of the knob 32 of the locking screw 30 and the shank 46 there is positioned a helical spring 54 which is somewhat compressed between the engagement surface 52 and the shank 46.

When the locking screw 30 is in its loosened position the support element 2 can be displaced in its longitudinal direction in the opening 28 within the limits defined by the stopping device 36. Thereby, the displacement of the stopping element 38 to the left in relation to the support leg 4 according to Fig. 2 is restricted by the engagement between the inner surface of the web portion 48 and the end surface 56 of the wall 34 opposite thereto. The displacement of the support element 2 in the opposite direction, i.e. to the right according to Fig. 2, is restricted by the corresponding engagement in the stopping device at the other support leg 4. Thus, the stopping devices 42 prevent that the support element 2 is provided in such a position in relation to the support legs 4 that the support element 2 laterally projects in such a way that it is dangerous for the traffic.

When the locking screw 30 is tightened the end of the locking screw which is positioned in the opening 28 will force the shank 40 against the lower surface of the support element 2 at the same time as the shank 46 is forced against the lower surface of the wall 44 by means of the spring 54. Thus, there is provided an effective locking and retaining of the stopping device 32 without any separate means. Also because of the structural feature that the locking screw 30 extends through the slot 50 formed in the shank 46 there is provided a restriction of the displacement of the support element 2 in the opening 28 within the limits of the engagement between the end surfaces of the slot 50 on one hand and the locking screw 30 on the other hand.

The invention can be modified within the scope of the following claims.

**Claims**

1. A luggage carrier for vehicles, comprising two support legs (4) which are adapted to be connected with the roof of the vehicle at opposite sides thereof and a preferably bar-shaped support elements (2) which is connected with the support legs such that the end portions of the support element are received in and extend through openings (28) formed in the support legs (4), the support element (2) being fixable in relation to each support leg (4) by means of a locking screw (30) which is received in a threaded hole in a wall (34) adjacent said opening and has an end portion which is screwable into the opening for engaging the support element, characterized in that a stopping device (36) for restricting the displacement of the support element (2) in the opening (28) is provided in association with at least one of said support legs (4).

2. A luggage carrier according to claim 1, characterized in that the stopping device (36) comprises a stopping element (38) which is connected with the support element (2) and has an engagement surface (48) which is adapted to engage with the support leg (4) or a portion (56) connected therewith in a predetermined relative position between the support element (2) and the support leg (4) when the support element (2) is displaced in the opening (28) in order to prevent displacement of the support element (2) beyond said predetermined position.

3. A luggage carrier as claimed in claim 2, characterized in that the stopping element (38) is substantially U-shaped having two shanks (40 and 46) and a web portion (48), the web portion (48) forming said engagement surface, one of the shanks (40) being positioned in the opening (28) of the support leg (4) between the wall (34) which is positioned adjacent the opening and in which the hole for the locking screw is formed and the end portion of the support element received in the opening and the other shank (46) being positioned at the opposite side of said wall (34) and being formed with a slot (50) extending in the longitudinal direction of the support element, the locking screw (30) extending through said slot (50) into the hole in said wall.

4. A luggage carrier as claimed in claim 3, characterized in that the free end portion (42) of the first shank (40) of the U-shaped stopping element (38) is firmly connected with the support element (2).

5. A luggage carrier as claimed in claim 3 or 4, characterized in that a spring (54) is positioned between the second shank (46) of the U-shaped stopping element and a shoulder (52) on the locking screw (30), so that the locking screw when being tightened will force the first shank (40) of the stopping element against the support element (2) and will also force the second shank (46) against the outer side of the wall (34) in which the hole for the locking screw is formed, through the spring (54).

**Revendications**

1. Porte-bagages pour véhicule comprenant deux pieds de support (4) qui sont adaptés pour être montés sur le toit du véhicule sur les côtés opposés de ce dernier et un élément de support (2) de préférence en forme de bar, qui est assemblé avec les pieds de support de telle sorte que les parties d'extrémité de l'élément de support soient logées dans des ouvertures (28) formées dans les pieds de support (4) et s'étendent à travers ces ouvertures, l'élément de support (2) pouvant être immobilisé par rapport à chaque pied de support (4) au moyen d'une vis de blocage (30) qui est logée dans un trou fileté formé dans une paroi (34) adjacente à ladite ouverture et qui comporte une partie d'extrémité pouvant être vissée dans l'ouverture pour porter contre l'élément de support, caractérisé en ce qu'un dispositif d'arrêt (36) destiné à limiter le déplacement de l'élément de support (2) dans l'ouverture (28) est associé à au moins un desdits pieds de support (4).

2. Porte-bagages selon la revendication 1, caractérisé en ce que le dispositif d'arrêt (36) comprend un élément d'arrêt (38) qui est assemblé à l'élément de support (2) et comporte une surface de contact (48) qui est adaptée pour venir porter contre le pied de support (4) ou une partie (56) de ce dernier dans une position relative prédéterminée entre l'élément de support (2) et le pied de support (4) quand on déplace l'élément de support (2) dans l'ouverture (28) afin d'empêcher que l'élément de support (2) ne se déplace au-delà de ladite position prédéterminée.

3. Porte-bagages selon la revendication 2, caractérisé en ce que l'élément d'arrêt (38) a·sensiblement la forme d'un U comportant deux branches (40 et 46) et une partie d'âme (48), la partie d'âme (48) formant ladite surface de contact, une des branches (40) étant disposée dans l'ouverture (28) du pied de support (4), entre la paroi (34) qui est adjacente à l'ouverture et dans laquelle est formé le trou pour la vis de blocage et la partie d'extrémité de l'élément de support logée dans l'ouverture, et l'autre branche (46) étant disposée sur le côté opposé de ladite paroi (34) et comportant une fente (50) s'étendant dans la direction longitudinale de l'élément de support, la vis de blocage (30) s'étendant à travers ladite fente (50) dans le trou de ladite paroi.

4. Porte-bagages selon la revendication 3, caractérisé en ce que la partie d'extrémité libre (42) de la première branche (40) de l'élément d'arrêt (38) en forme de U est assemblée fermement à l'élément de support (2).

5. Porte-bagages selon la revendication 3 ou 4, caractérisé en ce qu'un ressort (54) est placé entre la seconde manche (46) de l'élément d'arrêt en forme de U et un épaulement (52) de la vis de blocage (30) de telle sorte que la vis de blocage, lorsqu'on la serre, pousse la première branche (40) de l'élément d'arrêt contre l'élément de support (2) et pousse également, par l'intermédiaire du ressort (54), la seconde branche (46) contre le côté extérieur de la paroi (34) dans laquelle est formé le trou pour la vis de blocage.

**Patentansprüche**

1. Gepäckträger für Fahrzeuge mit zwei Stützschenkeln (4), die mit dem Dach des Fahrzeuges an seinen gegenüberliegenden Seiten verbindbar sind, und mit einem vorzugsweise stabförmigen Trägerelement (2), welches mit den Stützschenkeln derart verbunden ist, daß die Endteile des Trägerelementes in Öffnungen (28) aufgenommen sind und sich durch diese hindurch erstrecken, wobei die Öffnungen (28) in den Stützschenkeln (4) gebildet sind, das Trägerelement (2) bezüglich jedem Stützschenkel (4) mittels einer Verriegelungsschraube (30) befestigbar ist, die in einem mit Gewinde versehenen Loch in einer Wand (34) neben der Öffnung aufgenommen ist und ein Endteil hat, welches in die Öffnung für den Eingriff mit dem Trägerelement einschraubbar ist, dadurch gekennzeichnet, daß eine Anschlagvorrichtung (36) zur Beschränkung der Verschiebung des Trägerelementes (2) in der Öffnung (28) in Verbindung mit mindestens einem der Stützschenkel (4) vorgesehen ist.

2. Gepäckträger nach Anspruch 1, dadurch gekennzeichnet, daß die Anschlagvorrichtung (36) ein Anschlagelement (38) aufweist, welches mit dem Trägerelement (2) verbunden ist und eine Eingriffsoberfläche (48) hat, die geeignet derart ausgestaltet ist, daß sie mit dem Stützschenkel (4) oder einem Teil (56) in Eingriff kommt, welches mit diesem in bestrimmter relativer Lage zwischen dem Trägerelement (2) und dem Stützschenkel (4) verbunden ist, wenn das Trägerelement (2) in der Öffnung (28) verschoben wird, um eine Verschiebung des Trägerelementes (2) über die vorbestimmte Position hinaus zu verhindern.

3. Gepäckträger nach Anspruch 2, dadurch gekennzeichnet, daß das Anschlagelement (38) im wesentlichen U-förmig ist und zwei Schäfte (40 und 46) sowie ein Stegteil (48) aufweist, das Stegteil (48) die Eingriffsoberfläche bildet, daß einer der Schäfte (40) in der Öffnung (28) des Stützschenkels (4) zwischen der Wand (34), die neben der Öffnung angeordnet ist und in welcher das Loch für die Verriegelungsschraube gebildet ist, und dem Endteil des Trägerelementes angeordnet ist, welches in der Öffnung aufgenommen ist, und daß der andere Schaft (46) an der gegenüberliegenden Seite der Wand (34) angeordnet und mit einem Schlitz (50) versehen ist, der sich in

7  **0 079 318**  8

Längsrichtung des Trägerelementes erstreckt, wobei sich die Verriegelungsschraube 30 durch den Schlitz (50) in das Loch in der Wand hineinerstreckt.

4. Gepäckträger nach Anspruch 3, dadurch gekennzeichnet, daß das freie Endteil (42) des ersten Schaftes (40) des U-förmigen Anschlagelementes (38) fest mit dem Trägerelement (2) verbunden ist.

5. Gepäckträger nach Anspruch 3 oder 4, dadurch gekennzeichnet, daß eine Feder (54) zwischen dem zweiten Schaft (46) des U-förmigen Anschlagelementes und einer Schulter (52) der Verriegelungsschraube (30) angeordnet ist, so daß die Verriegelungsschraube beim Festziehen den ersten Schaft (40) des Anschlagelementes gegen das Trägerelement (2) drückt und auch den zweiten Schaft (46) gegen die Außenseite der Wand (40) drückt, in welcher das Loch für die Verriegelungsschraube gebildet ist, und zwar über die Feder (54).

Fig. 1.

1

*Fig.2.*